Europäisches Patentamt

European Patent Office

Office européen des brevets

(19)

(11) Publication number: **0 113 967**
A2

(12) # EUROPEAN PATENT APPLICATION

(21) Application number: 83307496.6

(22) Date of filing: 08.12.83

(51) Int. Cl.³: **B 01 D 1/18, C 13 K 1/10,** C 13 F 5/00

(30) Priority: 16.12.82 GB 8235889

(43) Date of publication of application: 25.07.84 Bulletin 84/30

(84) Designated Contracting States: AT BE DE FR IT NL SE

(71) Applicant: CPC INTERNATIONAL INC., International Plaza P.O. Box 8000, Englewood Cliffs New Jersey 07632 (US)

(72) Inventor: Rapaille, André L.I., Ravenlaan 15, B-1800 Vilvoorde (BE)
Inventor: Spruyt, Daniel S.J., Vredeplein 7, B-3200 Kessel-Lo (BE)

(74) Representative: Pennant, Pyers et al, Stevens, Hewlett & Perkins 5 Quality Court Chancery Lane, London, WC2A 1HZ (GB)

(54) Heat-pressure-expansion process for drying pure sugars or starch hydrolysates to prepare a free flowing powder.

(57) A process for producing a free flowing powdered solid form of a low softening point hygroscopic substance such as a pure sugar or starch hydrolysate comprises heating a concentrated aqueous solution of the substance to a temperature above its normal boiling point under positive pressure and spraying the solution into a zone, held at a lower temperature and pressure than the solution, through which flows a stream of air or other inert gas.

EP 0 113 967 A2

HEAT-PRESSURE-EXPANSION PROCESS FOR DRYING
PURE SUGARS OR STARCH HYDROLYSATES TO PREPARE
A FREE-FLOWING POWDER

## BACKGROUND OF THE INVENTION

### Field of the Invention

The present invention relates to free flowing powdered
solids which have low softening points and/or which are
hygroscopic such as sweeteners and particularly relates
to an energy efficient, heat-pressure expansion process
for preparing such powdered solids from solutions.

### The Prior Art

There are several well-known methods for drying sugar
syrups to produce powdered products. Solid glucose,
for example, can be manufactured by crystallizing supersaturated high glucose syrups and recovering the crystals
therefrom. The product can also be prepared by spray
drying in accordance with U.S. Patent No. 3,477,874. In
another method, a high dextrose bearing product is
prepared by adding a concentrated starch hydrolysate to a
heavy duty mixing device in which it is transformed to a
crystalline powder as disclosed in U.K. Patent Applications
2 077 270A.

Spray drying processes are commonly used in preparation
of powdered sugars and other powdered food products. In
U.S. Patent No. 3,477,874 mentioned above, a free-flowing
glucose product having a high DE value is prepared by spray
drying a high DE glucose syrup which has been blended with
more than 50% of the spray dried high DE glucose product
by recycling. The recycling is required to overcome
clogging problems normally associated with spray drying
high DE glucose, which other wise produces a very sticky

./.

product.  Similarly in U.S. Patent specification
4 099 982 an aqueous sucrose solution is evaporated
continuously while being subject to vigorous mechanical
agitation to produce a sucrose suspension which is spraydried immediately.  By using this technique it is said
that the production of a sticky product is avoided.

A spray drying process is used to produce a lactulose
powder in accordance with U.K. Patent specification
1,318,494 and it is used to prepare a low caking composite
maltitol powder in accordance with U.K. Patent specification
1,419,355.  In both cases an additive is mixed with the
upstream of the nozzle to prevent caking in the spray
dried product.

Variations from standard spray drying conditions have been
found to be advantageous when certain materials are
processed.  In U.K. Patent specification 1,498,119, for
example, extracts of vegetable materials are prepared
by extruding an extract into a chamber which is maintained
at sub-atmospheric pressure.  This results in a sudden
decompression which causes up to 50% of the water and
gases present in the extract to be immediately expelled
with a concurrent expansion and rapid drop in the temperature of the dried product.  The process yields a
porous granular product that dissolves easily in water.

In the present invention a process has been devised which
is particularly adapted to the production of a free flowing
powdered product from a low melting and/or hygroscopic
substance and which possesses additional advantages in
respect of reduced costs for energy and capital investment
and reduced floor space requirements.  The process is

./.

- 3 -

0113967

especially useful for the production of free flowing powdered product from substances which have low softening points and which are hygroscopic, particularly substances which soften significantly at a temperature in the range 50° to 100°C.  Materials in this category include pure sugars e.g. fructose, glucose, maltose and sucrose, derivatives of sugars e.g. sugar alcohols, starch hydrolysates e.g. maltodextrins, glucose syrups, derivatives of starch hydrolysates e.g. fructose syrups, derivatives of pure sugars or starch hydrolysates e.g. caramel, low softening point proteinaceous products especially by-products such as are contained in steep water from maize processing operations and whey products both of which contain carbohydrates as well as the proteinaceous substances.  Other substances to which the process according to the invention is applicable include various extracts such as hydrolysed vegetable protein, Maillard reaction products of hydrolysed vegetable protein, meat extract and yeast extract,all of which contain amino acids, proteins, peptides and varying amounts of salts.

For the purpose of convenience the invention will be discussed throughout the remainder of this specification in terms of starch hydrolysate but it should be understood that what is described applies generally to low softening point and/or hygroscopic materials especially those mentioned specifically above.

./.

## SUMMARY OF THE INVENTION

Preparatory to carrying out the process of the invention, an aqueous solution of a low softening point and/or hygroscopic substance eg. a starch hydrolysate or pure sugar may be first concentrated by removal of water, eg. by evaporation, up to a high dry substance eg. 70 to 97% by weight depending on the substance in question.

In the process of the invention a concentrated aqueous solution of a low softening point and/or hygroscopic substance is heated, eg. in a heat exchanger, to a temperature above its normal boiling point under a positive pressure and the pressurised, heated, concentrated solution is sprayed eg. by passage through a fine nozzle, into a zone which serves as a product collection chamber through which flows a stream of air or other inert gas said zone being maintained at a lower temperature and pressure than the solution whereby the pressurised, heated, concentrated solution explodes into said zone causing particulation and evaporation of the water and the product is obtained as a free flowing powder.

Preferably the pressure in said zone is atmospheric or slightly below atmospheric. Preferably the temperature in said zone is ambient up to 60°C. The temperature is more preferably near ambient but as it is advantageous to dry the air or inert gas in said zone and drying may take place by heating, the temperature may be higher than ambient.

In selected cases compressed air may be introduced to the solution immediately before it is sprayed ie. at the nozzle to aid particulation.

The process is distinguished from the spray drying
process used heretofor as follows :

1. The product leaving the evaporator station and
   passing through the nozzle can be at a much higher
   dry substance than feedstock to a spray drying tower,
   hence there is less water to be evaporated so enabling
   the water concentration in the zone to which the
   solution is fed to be less, which has a beneficial
   effect in countering the hygroscopic character of
   the product.

2. Hydrolysate at the nozzle can be at a higher temperature
   than at a spray drying nozzle and, therefore, the heat
   content of the solution is greater.

3. Hydrolysate at the nozzle is at a higher pressure than
   at a spray drying nozzle.

4. The atmosphere into which the material is atomised in
   the zone is at a lower temperature than in the conventional spray drying unit and thus the temperature of
   the product formed in the zone is lower, making the
   product less sticky.

In spray drying the product receives a significant amount
of heat from hot air in the spray tower whereas in the
process of the present invention most of the heat is
applied directly to the process material.  This results
in greater energy efficiency, higher throughput capability and other advantages that will be apparent to
those skilled in the art.

### Brief Description of the Drawing

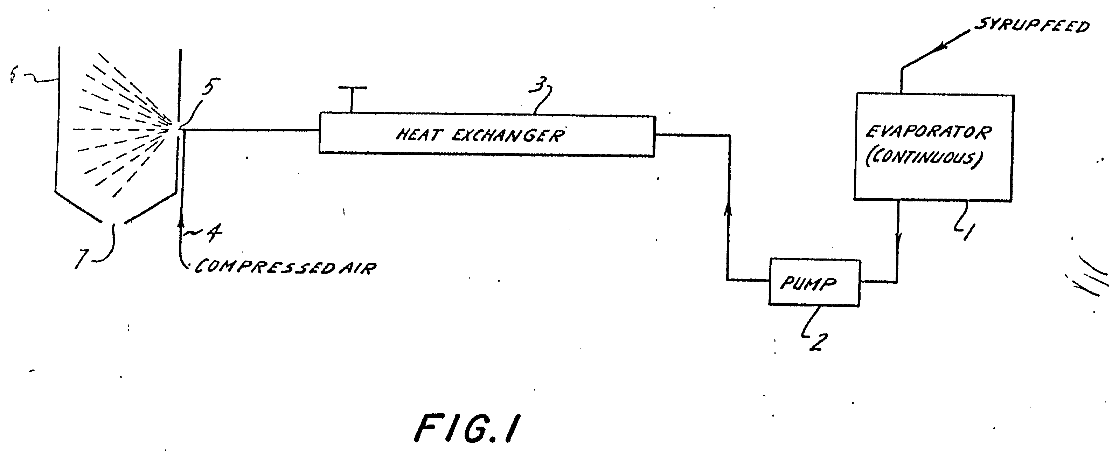

Figure 1 is a schematic diagram of the apparatus used
in accordance with the process of the present invention.

## DETAILED DESCRIPTION OF THE INVENTION

A starch hydrolysate (e.g., maltodextrin or glucose syrup) is fed to an evaporator 1 where it is concentrated to a high dry substance. Commercially available evaporation equipment (e.g., a wiped film evaporator) is used. The evaporator 1 operates continuously to provide concentrated hydrolysate which is transferred by pump 2 to heat exchanger 3. The dry substance after, the evaporation step is a function of product viscosity. Higher DE materials e.g., glucose syrups, can reach 85-95% dry substance and still be suitable for flow to the heat exchanger 3. Lower DE materials e.g., maltodextrins are evaporated to a dry substance between 75-85% above which they are too viscous to handle satisfactorily.

The functions of transfer and heat exchange may also be combined by use of an extrusion screw in a heated barrel. The means of transfer is not critical to the process.

Typically, the functions of transfer and heat exchange are separated. The concentrated hydrolysate is pumped by suitable gear and/or piston type pumps to the heat exchanger where its temperature is further increased.

Temperature rise of the concentrated hydrolysate in the heat exchanger 3 is accompanied by a rise in pressure. For starch hydrolysates, preferred conditions at the nozzle are temperatures of about 140-250° C. and pressures from about 3-10 bar.

The heat exchanger 3 can be of simple design and is typically a tube jacketed with a heating medium sufficient to provide a temperature increase from about 80-120° C. at the inlet of the heat exchanger to about 140-250° C. at the nozzle 5.

In some cases, before the nozzle 5, compressed air 4 at a pressure up to about 10 bar is introduced into the pressurized, heated, concentrated hydrolysate to assist in atomisation on emergence from the nozzle 5 into the product collection chamber 6.

Nozzle design is not critical to the process and nozzle apertures of about 1-2 mm are typical.

The product collection chamber 6 is a vessel equipped with a continuously passing current of air to enable continuous removal of the particulate product at exit port 7. Design is not critical and can include such features as fluidized beds, etc. The dimensions are much smaller than those of a conventional spray tower.

The process is essentially one of particulation. Subsequent milling of the product is not required.

The heat-pressure-expansion process of the invention can produce free flowing powdered products from a wide variety of starch hydrolysates. Glucose syrup produced by acid hydrolysis of starch, for example, may be successfully processed by the heat-pressure-expansion technique whereas this material cannot be effectively spray dried.

The apparatus used to practice the present invention occupies considerably less floor space and total volume than spray drying installations of the same capacity.

Application of most of the heat directly to the hydrolysate before particulation is a critical feature of the process. In spray drying, part of the heat energy is applied directly to the product, however, most of it is applied to the air in the spray tower where it is transferred to the product which has the effect of softening and making sticky products which have low softening points.

The injection of air into the heated, concentrated hydrolysate stream immediately before the nozzle 5 as mentioned above is an optional feature of the invention which can be used to enhance particulation. Particulation is effected by the explosion of hydrolysate at the nozzle and not solely by peripheral evaporation of water at the surface of the solidifying particle as in spray drying.

A study of process costs has demonstrated that the heat-pressure-expansion process of the invention requires only about 80% of the thermal energy of spray drying, giving substantial cost savings in the drying of starch hydrolysates.

The investment required for installation of the apparatus used to practice the process of the invention is lower than for a spray drying installation of equivalent capacity.

A commercial advantage is gained from the versatility of the invention to process a broader range of starch hydrolysates than spray drying.

## EXAMPLES

Process parameters for the following examples are summarized in Table 1.

The evaporator used in the examples was a Sybron Balfour 30 square meter continuous wiped film evaporator. Heat exchange was carried out in a tubular heat exchanger having a steam jacketed tube with an internal diameter of 2 cm, a length of 150 cm and a heat exchange surface of 924 $cm^2$. Standard piston and gear pumps were used for transport.

### Example 1

Acid converted glucose syrup was concentrated in a wiped film evaporator to 90% dry substance then dried by the process of the invention. A free flowing powdered product was obtained having the following properties:

| | |
|---|---|
| DE | 40.8 |
| Residual moisture content, % | 3.9 |
| Free flowing time (secs.) | 110 |
| Moisture uptake % at 60% R.H., 20° C, 4 hrs. | 0.5 |
| Caking test, kg. (force required to break the cake) | 0.9 |
| Dissolution time (secs.) in water (25° C.) | 105 |

Spray dried acid glucose syrup does not exist commercially due to the difficulty of handling this material in the spray

## TABLE 1 . — PROCESS PARAMETERS

| | ACID CONVERTED SYRUP (EXAMPLE 1) | ACID-ENZYME CONVERTED SYRUP 40 DE (EXAMPLE 2) | 18 DE MALTODEXTRIN (EXAMPLE 3) | MALTOSE ("PURE") (EXAMPLE 4) | HIGH 50% MALTOSE SYRUP (EXAMPLE 5) | HIGH 75% MALTOSE SYRUP (EXAMPLE 6) |
|---|---|---|---|---|---|---|
| EVAPORATION TEMPERATURE °C | 125 | 125 | 120 | 135 | 130 | 135 |
| VACUUM TORR | 500 | 500 | 600 | 420 | 600 | 420 |
| THROUGHPUT KG/HR. | 80 | 80 | 80 | 80 | 80 | 80 |
| D.S. AFTER EVAPORATION % | 92 | 92 | 78 | 95 | 93 | 94.5 |
| PRODUCT IN HEAT EXCHANGER TEMP. °C | 150 | 150 | 150 | 150 | 150 | 150 |
| PRESSURE BAR | 5 | 5 | 5 | 5 | 5 | 5 |
| AIR PRESSURE AT THE NOZZLE BAR | ≃ 6 | ≃ 6 | ≃ 6 | ≃ 6 | ≃ 6 | ≃ 6 |
| FLOW RATE $(M^3/HR.)$ | 150 | 150 | 150 | 150 | 150 | 150 |
| NOZZLE DIAMETER (mm.) | 1,5 | 1,5 | 2,0 | 1,5 | 1,5 | 1,5 |
| AIR TEMP. °C IN PRODUCT COLLECTION CHAMBER | 50 | 50 | 50 | 50 | 50 | 50 |

drying operation. For this reason, side by side comparison of product properties with a spray dried version was not possible.

## Example 2

A 40 DE acid-enzyme converted glucose syrup was dried by spray drying and by the process of the invention. Side by side comparison of product properties gave the following results:

|  | Heat-pressure-Expansion product | Spray dried product |
| --- | --- | --- |
| Residual moisture content, % | 4.4 | 5.3 |
| Free flowing time (secs.) | 30 | 50 |
| Moisture uptake % at 60% R.H., 20° C, 4 hrs. | 0.7 | 0.7 |
| Caking test, kg (force required to break the cake) | 0.8 | 0.7 |
| Dissolution time (secs.) in water (25° C) | 90 | 32 |
| Oil absorption, % | 35 | 36 |

This demonstrates the equivalent performance of a spray dried product and one produced by the more economical process of the invention.

## Example 3

An 18 DE maltodextrin in aqueous solution was concentrated to 78% dry substance by evaporation of water. After it was dried in accordance with the process of the invention the

0113967

residual moisture content in the particulate product was 6.0%.
The results were as follows:

|  | Heat-pressure-Expansion product | Spray dried product |
|---|---|---|
| Free flowing time (secs.) | 45 | 90 |
| Moisture uptake % at 60% R.H., 20°C, 4 hrs. | 0.47 | 0.47 |

## Example 4

A solution of maltose was concentrated to 95.3% dry substance
then dried by the process of the invention to give a free flowing
amorphous powder having a residual moisture content of 3.8%. As
expected moisture uptake was acceptable but higher than that of
a sample of crystalline maltose due to the amorphous nature of
the dried product. The results were as follows:

|  | Heat-pressure-Expansion product | Crystalline Maltose |
|---|---|---|
| Free flowing time (secs.) | 85 | 50 |
| Moisture uptake % at 60% R.H., 20°C, 4 hrs. | 5.6 | 0.09 |

## Example 5

High maltose syrup containing 50% maltose was dried by both
spray drying and by the process of the invention. The products
were compared for technological properties:

0113967

|  | Heat-pressure-<br>Expansion product | Spray dried<br>product |
|---|---|---|
| Residual moisture content, % | 2.1 | 4.2 |
| Free flowing time (secs.) | 95 | 25 |
| Moisture uptake % at<br>60% R.H., 20° C, 4 hrs. | 0.4 | 0.5 |
| Caking test, kg | 2.1 | 0.9 |
| Dissolution time (secs.)<br>in water (25° C) | 69 | 43 |

These properties indicate equivalent performance of products dried by the two techniques.

## Example 6

High maltose syrup containing 75% maltose was successfully dried by the process of the invention and the product properties were compared with those of a spray dried version of the product. (Spray drying of the syrups was found to be difficult.) The results which follow demonstrate comparative property profiles obtained by spray drying and the process of the invention.

|  | Heat-pressure-<br>Expansion product | Spray dried<br>product |
|---|---|---|
| Residual moisture content, % | 4.0 | 4.2 |
| Free flowing time (secs.) | 20 | 60 |
| Moisture uptake % at<br>60% R.H., 20° C, 4hrs. | 0.6 | 0.8 |
| Caking test, kg | 0.8 | 0.6 |
| Dissolution time (secs.)<br>in water (25° C) | 70 | 25 |
| Oil absorption, % | 29 | 35 |

0113967

Having set forth the general nature and some specific examples of the present invention, the scope is now particularly set forth in the appended claims.

CLAIMS

1. A process for producing a free flowing powdered solid form of a low softening point and/or hygroscopic substance characterised in that :

   (a) a concentrated aqueous solution of said substance is heated to a temperature above its normal boiling point under positive pressure.

   (b) the pressurised, heated, concentrated aqueous solution is sprayed into a zone through which flows a stream of air or other inert gas, said zone being maintained at a lower temperature and pressure than the solution whereby the pressurised, heated, concentrated solution explodes into said zone causing particulation and evaporation of the water and the product obtained as a free flowing powder.

2. A process according to Claim 1 characterised in that preparatory to carrying out the process, an aqueous solution of said substance is concentrated by evaporation of water to up to 70 to 97% by weight dissolved substance.

3. A process according to Claim 1 or Claim 2 characterised in that the temperature of the pressurised, heated, concentrated aqueous solution is 140° to 250°C.

4. A process according to Claim 2 characterised in that the pressure of the pressurised, heated, concentrated aqueous solution is 3 to 10 bar.

./.

5. A process according to any one of the preceding claims characterised in that the pressure in said zone is atmospheric or slightly below atmospheric.

6. A process according to any one of the preceding claims characterised in that the temperature in said zone is in the range ambient up to 60°C.

7. A process according to any one of the preceding claims characterised in that compressed air is introduced to the solution immediately before it is sprayed.

8. A process according to Claim 7 characterised in that the pressure of the compressed air is up to 10 bar.

9. A process according to any one of the preceding claims characterised in that the low softening point and/or hygroscopic substance is a pure sugar, a sugar derivative, a starch hydrolysate, a low softening point proteinaceous product, a derivative of a pure sugar or a derivative of a starch hydrolysate.

10. An apparatus for use in a process according to any one of the preceding claims comprising :
a) heat exchange means for pressurizing and heating said concentrated aqueous solution of said low softening point and/or said hygroscopic substance.

b) nozzle means for atomising the pressurised, heated, concentrated, aqueous solution and

c) collection means for containing and collecting the atomised product.

11. The apparatus of Claim 10, further provided with compressed air means connected to said nozzle means.

12. The apparatus of Claims 10 or 11 provided with concentration means upstream of said heat exchange means for concentrating an aqueous solution of said substance to provide concentrated aqueous solution to said heat exchange means.

13. The apparatus of Claims 10, 11 or 12 provided with transfer means to transfer said concentrated aqueous solution to said heat exchange means.

SYRUPFEED

EVAPORATOR (CONTINUOUS) 1

PUMP 2

HEAT EXCHANGER 3

COMPRESSED AIR 4

5

6

7

FIG.1